(19) **Europäisches Patentamt**
**European Patent Office**
**Office européen des brevets**

(11) **EP 1 955 926 A2**

(12) **EUROPEAN PATENT APPLICATION**

(43) Date of publication:
**13.08.2008 Bulletin 2008/33**

(51) Int Cl.:
**B62D 5/04** $^{(2006.01)}$

(21) Application number: **08002210.6**

(22) Date of filing: **06.02.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **07.02.2007 JP 2007027703**

(71) Applicant: **NSK Ltd.**
**Tokyo 141-8560 (JP)**

(72) Inventor: **Jiang, ChunHao**
**Maebashi-shi**
**Gunma 371-8527 (JP)**

(74) Representative: **Grünecker, Kinkeldey,**
**Stockmair & Schwanhäusser**
**Anwaltssozietät**
**Leopoldstrasse 4**
**80802 München (DE)**

(54) **Control device for electric power steering apparatus**

(57)     A control device for an electric power steering apparatus includes a control unit which controls a motor giving steering assist force to a steering system according to a current command value computed based on steering toque and vehicle speed in a vector control manner and an advance angle map for compensating for a phase lag occurring in a motor current relative to the current command value. Advance angle compensation is made for the current command value based on the advance angle map.

*FIG. 1*

**Description**

BACKGROUND OF THE INVENTION

1. Field of the Invention

This invention relates to a control device for an electric power steering apparatus for giving steering assist force of a motor to a steering system of a vehicle, in particular, the invention relates to a control device for an electric power steering apparatus for compensating for the phase difference between a current command value and a motor current in vector control manner by making an advance angle adjustment to the electrical angle of the current command value so as to suppress occurrence of a torque ripple, vibration, and an unusual sound.

2. Description of Related Art

An electric power steering apparatus, which gives steering assist force to a steering system of a vehicle by rotation force of a motor, transmits driving force of a motor to a steering shaft or a rack shaft by a transmission mechanism of a gear, a belt, or the like through a speed reducer. This electric power steering apparatus of a related art performs feedback control of motor current to precisely generate assist torque (steering assist force). The feedback control is to adjust the motor application voltage so as to lessen the difference between a current command value and a motor current detection value, and adjustment of the motor application voltage is generally performed by the duty ratio of PWM (pulse width modulation) control.

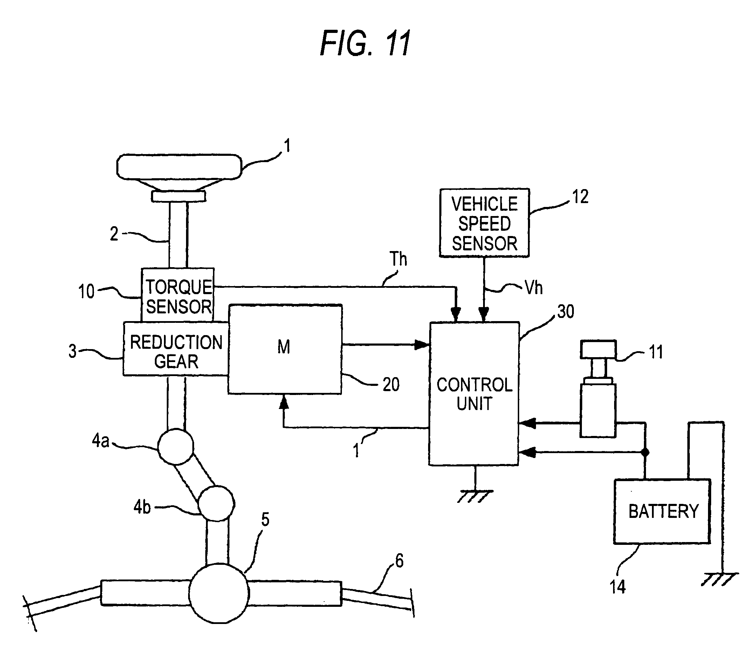

The general configuration of the electric power steering apparatus will be discussed with reference to FIG. 11. A column shaft 2 of a steering wheel 1 is joined to a tie rod 6 of a steered wheel through a reduction gear 3, universal joints 4a and 4b, and a pinion rack mechanism 5. The column shaft 2 is provided with a torque sensor 10 for detecting steering torque of the steering wheel 1, and a motor 20 for assisting the steering force of the steering wheel 1 is joined to the column shaft 2 through the reduction gear 3. Power is supplied from a battery 14 to a control device 30 for controlling the power steering apparatus and an ignition signal is also input to the controller 30 through an ignition key 11. The control device 30 computes a steering assist command value I of an assist command based on steering torque Th detected by the torque sensor 10 and vehicle speed Vh detected by a speed sensor 12, and controls the current to be supplied to the motor 20 based on the computed steering assist command value I.

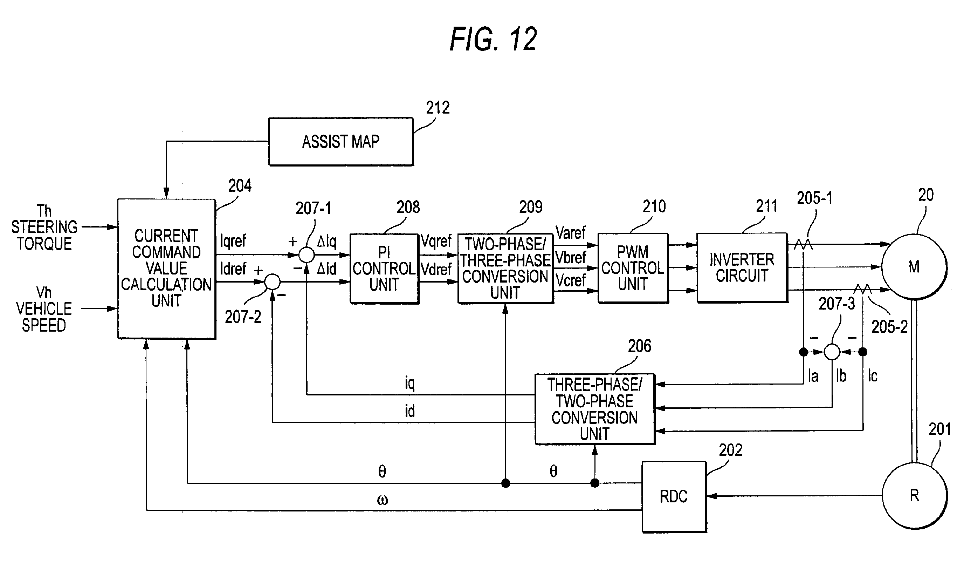

The control device 30 is implemented mainly as a CPU (containing an MPU or an MCU); general functions executed by a program in the CPU are as shown in FIG. 12 by using a vector control method. In the vector control method, a q axis for controlling torque of a coordinate axis of a rotor magnet and a d axis for controlling the strength of a magnetic field are set independently and the current of each of the axes having a 90-degree relation is controlled. As the motor 20, generally a brushless DC motor is used.

The control device 30 includes a current command value calculation unit 204. To the current command value calculation unit 204, inputted are the steering torque Th from the torque sensor 10, the vehicle speed Vh from the speed sensor 12, and angle $\theta$ and angular velocity $\omega$ which are obtained by converting outputs from a resolver 201 attached to the brushless DC motor 20 by a resolver digital conversion circuit (RDC) 202. Then, the current command value calculation unit 204 computes current command values Idref and Iqref of the d-q axes by referring an assist map 212.

The computed current command values Idref and Iqref are input to subtraction units 207-1 and 207-2 and feedback control is performed by detecting actual motor currents Ia, Ib, and Ic of the motor 20 relative to the subtraction units 207-1 and 207-2. Specifically, current detectors 205-1 and 205-2 detect the motor currents Ia and Ic of two phases and a subtraction unit 207-3 calculates the motor current Ib as Ib = -(Ia + Ic) because of the relation of Ia + Ib + Ic = 0. The motor currents Ia, Ib, and Ic of three phases thus calculated are input to a three-phase/two-phase conversion unit 206 for performing vector control and are converted into motor currents iq and id of two phases based on the angle 6 of the motor 20.

Next, the motor currents iq and id are fed back into the subtraction units 207-1 and 207-2 respectively and the subtraction unit 207-1 calculates deviation $\Delta$Iq between the current command value Iqref and the motor current iq; and the subtraction unit 207-2 calculates deviation $\Delta$Id between the current command value Idref and the motor current id. The deviations $\Delta$Iq and $\Delta$Id are input to a PI (proportional integral) control unit 208, and the PI control unit 208 outputs PI-controlled voltage command values Vdref and Vqref. Then, since currents of three phases need to be supplied to the actual motor 20, a two-phase/three-phase conversion unit 209 converts the voltage command values Vdref and Vqref into voltage command values Varef, Vbref, and Vcref of three phases and inputs the voltage command values Varef, Vbref, and Vcref to a PWM control unit 210. The PWM control unit 210 generates a PWM control signal based on the voltage command values Varef, Vbref, and Vcref. An inverter circuit 211 supplies the currents Ia, Ib, and Ic to the motor 20 based on the PWM control signal for controlling the motor 20 so that the deviations $\Delta$Iq and $\Delta$Id become 0.

The PWM control for the brushless DC motor controls rotation of the motor by energizing the energization phase corresponding to the rotor angle based on a resolver, an encoder, etc., for detecting the rotor rotation angle of the motor. To improve steering feeling of the electric power steering apparatus, that is, to decrease motor torque ripple, it is also necessary to make it possible for the motor current detection value to follow the current command value when the motor rotates at high speed.

However, to perform the PWM control with high accuracy, the resolution of a rotation angle detection sensor needs to be increased and if the number of revolutions of the motor is increased, a phase difference occurs due to the coil inductance effect. To solve the occurrence of the phase difference, a rotation speed sensor for detecting the rotation speed of the rotor and a current sensor for detecting the current amount by switching are provided and vector control for determining the advance angle amount for actual energization is performed. However, in general vector control, a control circuit requires a current sensor, a current smoothing capacitor, and coil. Thus, the number of components increases and the configuration of the control circuit is complicated and is upsized and the manufacturing cost grows; this is a problem.

To solve this problem, for example, there is a motor control method disclosed in Japanese Patent Examined Publication No. JP-B-3501370. In the method of JP-B-3501370, the phase difference between voltage and current is estimated according to the target motor rotation speed, excess or deficiency of output torque is determined from the relationship between the detected motor rotation speed and the advance angle corresponding to the estimated phase difference, and the amount of advance angle compensation is increased. That is, the method is a method of controlling a synchronous motor having a rotor and a stator wherein the rotor can rotate on a shaft by magnetic flux produced by the stator, the method including the steps of (1) detecting the rotation position and the rotation speed of the rotor, (2) estimating the phase difference between voltage and current from the rotation speed of the rotor detected by rotation angle detection means, (3) comparing the target rotor rotation speed with the detected rotor rotation speed, (3-1) if the detected rotation speed is lower than the target rotation speed, increasing the amount of advance angle compensation at the energizing time for increasing the rotation speed, and (3-2)if the detected rotation speed is higher than the target rotation speed, lessening the amount of advance angle compensation at the energizing time for decreasing the rotation speed, thereby controlling the rotation speed and the rotation direction of the rotor.

A control device for an electric power steering apparatus disclosed in Japanese Patent Unexamined Publication No. JP-A-2005-199735 owned by the present applicant, in order to solve a problem of a torque ripple, vibration, and an unusual sound caused by the phase difference occurring from the lag between information of the actual motor (position, angular velocity, voltage, current, counter electromotive force, etc.,) and information used with control, obtains the phase difference responsive to angular velocity according to a linear function of easy computation, adds the phase difference to the electrical angle, and compensates for the current command value in vector control based on the modified electrical angle. That is, the control device for an electric power steering apparatus giving assist force of a motor to a steering system obtains the phase difference responsive to the angular velocity in a vector control method, adds the phase difference to the electrical angle to calculate modified electrical angle, and compensates for current command value generation in the vector control based on the modified electrical angle.

However, in the motor control method in JP-B-3501370, the advance angle is compensated for matching the motor rotation speed with the target value to prevent excess or deficiency of the output torque of the motor. That is, since control of matching with the target torque is adopted in JP-B-3501370, there is a problem that an adjustment method with the motor rotation speed as the target cannot be applied to an electric power steering apparatus for performing torque control.

When the phase difference is compensated for, since the phase difference is proportional to given lag amount and angular velocity, the control device for the electric power steering apparatus in JP-A-2005-199735 is configured so as to give the advance angle obtained according to the linear function and predetermined offset amount, so that computation of the advance angle can be performed easily, however, there is a problem that the characteristic of the compensation becomes linear compensation.

It has become easy to compute and find a non-linear compensation value with improved accuracy with improvement of the processing capability of a CPU (or an MPU or an MCU) used for motor control in recent years, and there is also a demand for compensating for the phase difference caused by an external factor.

SUMMARY OF THE INVENTION

It is therefore an object of the invention to provide a control device for an electric power steering apparatus high in reliability capable of suppressing occurrence of a torque ripple, vibration, and an unusual sound by previously finding the relationship between motor rotation speed and motor current phase difference (phase lag) and compensating for the motor current phase lag and also making it possible to deal with a phase difference (phase error) caused by an external factor.

According to an aspect of the present invention, there is provided a control device for an electric power steering apparatus including:

a control unit which controls a motor giving steering assist force to a steering system according to a current command value computed based on steering toque and vehicle speed in a vector control manner; and

an advance angle map for compensating for a phase lag occurring in a motor current relative to the current command value,

wherein advance angle compensation is made for the current command value based on the advance angle map.

According to the present invention, in the control device of this aspect, it may be adaptable to configure such that in the advance angle map, a compensation angle for compensating for the phase lag in response to motor rotation speed is added to the electrical angle of the motor.

According to the present invention, in the control device of this aspect, it may be adaptable to configure such that the compensation angle is a non-linear characteristic in response to the motor rotation speed.

Further, according to another aspect of the present invention, there is provided a control device for an electric power steering apparatus including:

a control unit which controls a motor giving steering assist force to a steering system according to a current command value computed based on steering toque and vehicle speed in a vector control manner; and

a phase error detection unit which detects a phase error time of a motor current relative to the current command value caused by an external factor,

wherein advance angle compensation is made for the current command value based on the phase error time.

According to the present invention, in the control device of this aspect, it may be adaptable to configure such that the phase error detection unit makes a comparison between current waveforms of the current command value and the motor current and detects the phase error time.

According to the present invention, it may be adaptable to configure such that the control device of this aspect further including:

an advance angle error gain unit which calculates an advance angle error gain based on the rotation speed of the motor and a preceding advance angle error gain; and

a storage unit which stores the advance angle error gain calculated by the advance angle error gain unit.

According to the present invention, in the control device of this aspect, it may be adaptable to configure such that upon detection of an advance angle error gain update pulse output from the phase error detection unit, the storage unit stores the advance angle error gain and the advance angle error gain unit computes the advance angle error gain.

According to the present invention, in the control device of this aspect, it may be adaptable to configure such that the phase error detection unit makes a comparison between the detected phase error time and a predetermined time and if the phase error time is larger than the predetermined time and the motor rotation speed is larger than predetermined rotation speed, the phase error detection unit outputs the phase error gain update pulse.

According to the present invention, in the control device of this aspect, it may be adaptable.to configure such that upon detection of the phase error gain update pulse, the storage unit converts the stored advance angle error gain into preceding advance angle error gain and stores the preceding advance angle error gain.

According to the present invention, it may be adaptable to configure such that the control device of this aspect further including:

advance angle compensation computation unit which calculates an error compensation value based on the advance angle error gain and the motor rotation speed,

wherein advance angle compensation is made for the current command value according to the error compensation value.

According to the present invention, in the control device of this aspect, it may be adaptable to configure such that the advance angle compensation computation unit adds the error compensation value to the electrical angle of the motor, thereby making advance angle compensation.

According to the control device of the power steering apparatus of the invention, advance angle compensation is made for the electrical angle of the current command value based on the advance angle map that can be previously found from the relationship between the motor rotation speed and the motor current phase lag, so that the phase lag can be reliably compensated for. Also for the phase error between the current command value and the motor current, caused by an external factor, an advance angle error gain is calculated based on the detected phase error and advance angle compensation is made for the electrical angle of the current command value conforming to the detected motor rotation speed, so that occurrence of a torque ripple, vibration, and an unusual sound caused by the phase lag and the phase difference can be suppressed.

BRIEF DESCRIPTION OF THE DRAWINGS

FIG. 1 is a block diagram to show the basic configuration according to the invention;
FIG. 2 is a characteristic drawing to show an example of the relationship between the input current frequency of a current command value and phase lag;
FIG. 3 is a characteristic drawing to show an example of the relationship between motor rotation speed and phase lag;
FIG. 4 is a characteristic drawing to show a state where a phase lag occurs;
FIG. 5 is a characteristic drawing to show a state where a phase error occurs;
FIG. 6 is a characteristic drawing to show another state where a phase error occurs;
FIG. 7 is a block diagram to show a configuration example according to the invention;
FIG. 8 is a flowchart to show an operation example of the invention;
FIG. 9 is a characteristic drawing to show a state where the phase lag is compensated for;
FIG. 10 is a characteristic drawing to show a state where the phase lag and the phase error are compensated for;
FIG. 11 is a drawing to show a configuration example of an electric power steering apparatus in a related art; and
FIG. 12 is a block diagram to show a configuration example of a control device for the electric power steering apparatus in the related art.

DETAILED DESCRIPTION OF THE PREFERED EMBODIMENTS

A control device for an electric power steering apparatus according to the invention previously obtains the relationship between phase lag and motor rotation speed as an advance angle map based on a transfer function of a closed loop of a motor control circuit, in advance. The control device makes advance angle compensation for the electrical angle of a current command value according to the advance angle map in response to the detected motor rotation speed and compensates for the phase lag of the motor current. Further, to compensate for a phase error caused by an external factor, the control device detects a phase error between the current command value and the motor current, computes an error compensation value to compensate for the phase error, and adds the value to the compensation angle from the advance angle map for making advance angle compensation for the electrical angle of the current command value, thereby compensating for the phase lag and the phase error of the motor current.

An embodiment of the invention will be explained with reference to the accompanying drawings.

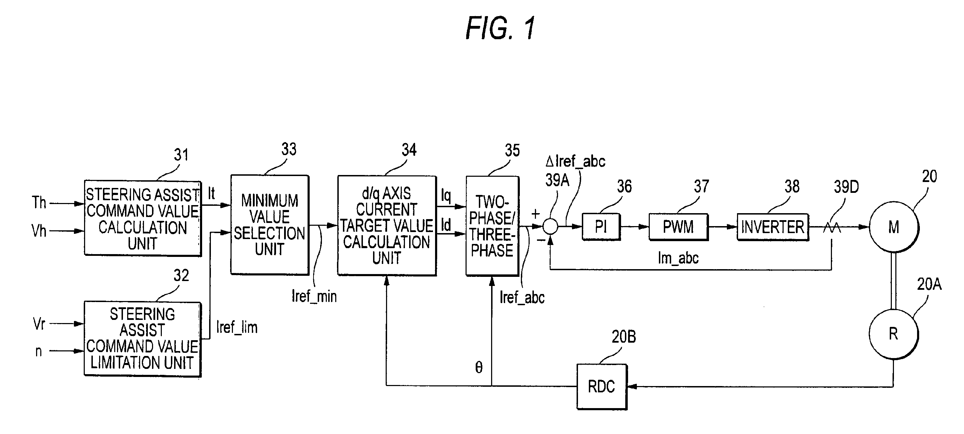

FIG. 1 is a block diagram to show the basic configuration of the invention.

Steering torque Th from a torque sensor 10 and vehicle speed Vh from a speed sensor 12 are input to a current command value calculation unit 31, and a steering current target value It computed by the current command value calculation unit 31 is input to a minimum value selection unit 33.

A supply voltage Vr and motor rotation speed n are input to a steering assist command value limitation unit 32, and a current command limitation value Iref_lim obtained by the steering assist command value limitation unit 32 is input to the minimum value selection unit 33.

The minimum value selection unit 33 makes a comparison between the input steering current target value It and the input current command limitation value Iref_lim and outputs the smaller value as a current command value Iref_min to a d/q axis current target value calculation unit 34.

The d/q axis current target value calculation unit 34 computes current command values Id and Iq of d-q axes in vector control manner based on the input current command value Iref_min and outputs the current command values Id and Iq to a two-phase/three-phase conversion unit 35.

The two-phase/three-phase conversion unit 35 executes two-phase/three-phase conversion of the d axis current Id and q axis current Iq and outputs current command values Iref_a, Iref_b, andIref_cof three phases (which will be hereinafter referred to simply as Iref_abc) are input to a subtraction 39A.

Motor currents Im_a, Im_b, and Im_c (which will be hereinafter referred to simply as Im-abc) detected by a motor current detection unit 39D are input to the subtraction 39A, which then performs subtraction processing of the motor current Im_abc and the current command value Iref_abc and outputs deviation ΔIref_abc to a PI (proportional integral) control unit 36.

PI-controlled voltage command values Vref_a, Vref_b, and Vref_c of three phases (which will be hereinafter referred to simply as Vref_abc) are input to a PWM control unit 37, which then generates a PWM control signal based on the voltage command value Vref_abc and outputs the PWM control signal to an inverter circuit 38.

The inverter circuit 38 supplies a current to a motor 20 based on the PWM control signal and drive of the motor 20 is controlled so that the deviation ΔIref_abc between the current command value Iref_abc and the motor current Im_abc becomes 0.

A resolver 20A is attached to the motor 20 as a rotation sensor and angle θ detected by an RDC 20B is input to the d/q axis current target value calculation unit 34 and the two-phase/three-phase conversion unit 35.

The d/q axis current target value calculation unit 34 obtains the q axis current Iq of vector control based on the current command value Iref_min according to the following expression 1 of a torque constant expression:

[Expression 1]

$$I_q = \frac{2/3 * Kt * I_{ref\_\min} * \omega - e_d * I_d}{e_q}$$

herein Kt is a torque constant and eq and $e_d$ are q axis component and d axis component provided by executing three-phase/two-phase conversion of counter electromotive force of the motor 20.

The two-phase/three-phase conversion unit 35 finds the current command value Iref_abc of three phases according to the following expression 2 of a two-phase/three-phase conversion expression based on the current command values Id and Iq:

[Expression 2]

$$\begin{bmatrix} I_{ref\_a} \\ I_{ref\_b} \\ I_{ref=b} \end{bmatrix} = \begin{bmatrix} \cos\theta & \sin\theta \\ \cos(\theta - 2/3\pi) & \sin(\theta - 2/3\pi) \\ \cos(\theta + 2/3\pi) & \sin(\theta + 2/3\pi) \end{bmatrix} \begin{bmatrix} I_d \\ I_q \end{bmatrix}$$

f a state of outputting ideal torque with no phase lag as the motor current Im_abc detected by the motor current detection unit 39D completely follows the current command value Iref_abc is represented based on Expression 1 mentioned above, it is represented as following expression 3:

[Expression 3]

$$T = (I_{m\_a} * e_a + I_{m\_b} * e_b + I_{m\_c} * e_c)/\omega$$

herein $e_a$, $e_b$ and $e_c$ are counter electromotive forces of a, b, and c phases of the motor 20.
This means that the output torque expression of Expression 3 mentioned above is an ideal torque expression with no occurrence of torque ripple.

Next, the principle of the invention for finding an advance angle map from the relationship between the motor rotation speed and the phase lag of the motor current and compensating for the current command value Iref_abc according to the advance angle map will be discussed below.

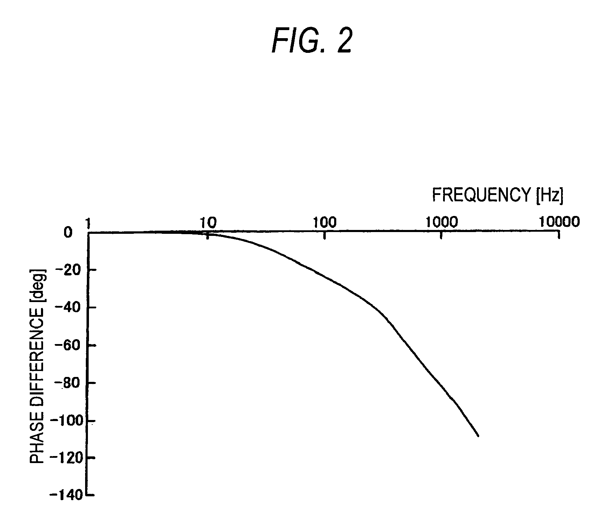

As described above, as the motor rotation speed becomes higher, motor resistance, the effect of inductance by the coil, internal resistance caused by variations in control units (ECUs) at the manufacturing time, cutoff frequency of a controller in a motor control system, dead time caused by input/output to/from other components, and the like cause a phase lag to occur and generate a torque ripple.
Then, in the invention, based on the phase lag that can be previously estimated, advance angle compensation is made for the electrical angle θ of the current command value Iref_abc for compensating for the phase lag of the motor current. That is, a transfer function of a phase lag component of a closed loop circuit from current command value computation of a control system to output to a motor is previously obtained, and the phase lag of the motor current is compensated for in accordance with the transfer function. The phase characteristic of the closed loop circuit based on the transfer function shows a characteristic as in FIG. 2.

FIG. 2 shows a characteristic example wherein the phase difference becomes larger as the frequency of the current command value Iref_abc becomes higher. That is, it shows that the higher the motor rotation speed, the larger is the phase difference between the current command value Iref_abc and the motor current Im_abc. The relationship between the phase difference and the input current frequency obtained based on the characteristic in FIG. 2 is shown in the following expression 4.

[Expression 4]

$$\theta_a = G(f)$$

herein θa is phase lag (deg) and becomes compensation angle for compensating the advance angle, and f is input frequency (Hz). The relationship between the input frequency f and motor rotation speed n [rpm] is shown in the following expression 5.

[Expression 5]

$$f = \frac{p * n}{60}$$

herein p is the number of pairs of motor poles.
From Expressions 4 and 5 mentioned above, a relational expression between the motor rotation speed n and the phase lag θa is obtained like the following expression 6.

[Expression 6]

$$\theta_a = G(p * n / 60) = F(n)$$

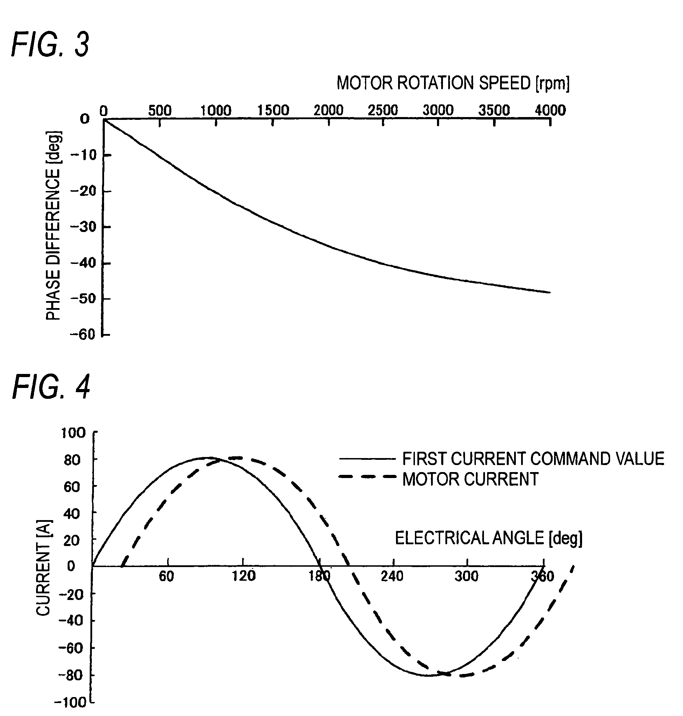

or example, for a motor including eight magnetic poles, the phase difference found by assigning the number of pairs of poles p = 4 and the detected motor rotation speed n to Expression 6 mentioned above is shown in FIG. 3.
FIG. 3 shows that the "lag" of the phase of the motor current Im_abc increases relative to the current command value Iref_abc with an increase in the motor rotation speed n and also shows the characteristic of the phase lag becomes non-linear relation.
FIG. 4 shows a state where a phase lag occurs. FIG. 4 is a characteristic drawing to specifically show a state where the motor rotation speed n increases and a phase lag occurs between first current command value Iref_a' and motor current Im_a. FIG. 4 shows the waveform of the first current command value Iref_a' of the a phase of the motor at the motor rotation speed n (1000 [rpm]) and the waveform of the motor current Im_a of the a phase and shows a state where the phase of the current waveform of the motor current Im_a is delayed about 20 degrees (electrical angle) as compared with the first current command value Iref_a'.
The characteristic in FIG. 3 is previously put into a map (advance angle map), whereby advance angle compensation can be made for the electrical angle θ of the current command value Iref_abc to compensate for the phase lag of the motor current Im_abc as shown in FIG. 4.
Thus, in the invention, the ideal current command value Iref_abc calculated based on Expression 1 mentioned above is set to a first current command value Iref_abc' , an advance angle map set so that the first current command value Iref_abc' and the motor current Im_abc become the same phase is previously obtained, and advance angle compensation is made for the electrical angle θ of the current command value Iref_abc. That is, the phase lag between the first current command value Iref_abc' and the motor current Im_abc is compensated for according to a second current command value Iref_abc" for which advance angle compensation has been made according to the compensation angle θa in the advance angle map.
Next, the principle of the invention for compensating for a phase error between the first current command value Iref_abc' and the motor current Im_abc, caused by an external factor (for example, temperature fluctuation, etc.,) will be discussed below.
Expressions 1 to 6 mentioned above do not take into account of an external factor of temperature fluctuation, etc. This means that the motor current Im_abc may be unable to follow the first current command value Iref_abc' if the above-described advance angle compensation only with the advance angle map is made. For example, the phase lag can be compensated for using the advance angle map at the designed temperature, however a phase error caused by temperature fluctuation cannot be dealt with if compensation only with the advance angle map is made. Thus, the motor current Im_abc cannot follow the first current command value Iref_abc'.

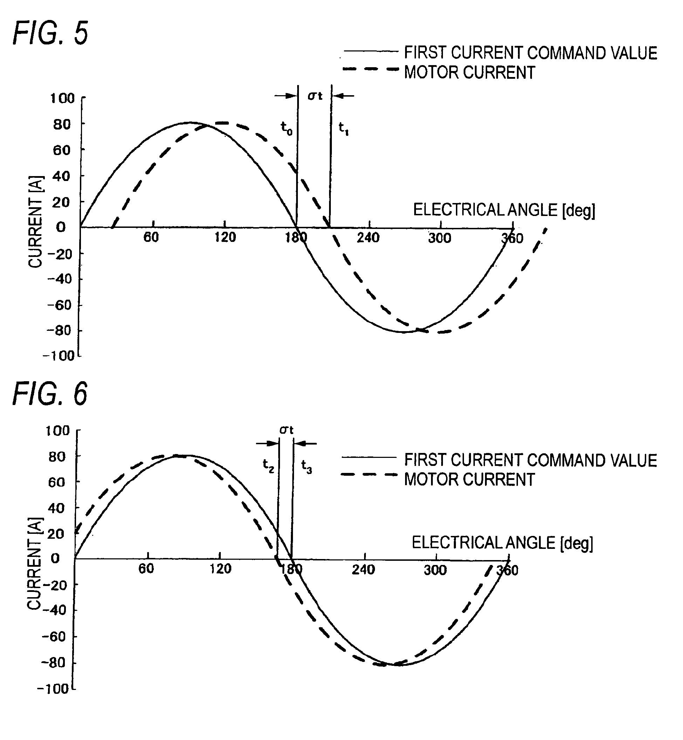

FIG. 5 shows a state where such a phase error disabling the motor current Im_abc from following the first current command value Iref_abc' occurs. It shows an example wherein the phase of the motor current Im_a lags by $(t_1 - t_0)$ where $t_0$ is the point at which the first current command value Iref_a' takes 0 [A] (which will be hereinafter referred to simply as "zero point crosspoint") and $t_1$ is the zero point crosspoint of the current waveform of the motor current Im_a due to temperature fluctuation.

FIG. 6 shows an example wherein due to temperature fluctuation, the zero point crosspoint of the current waveform of the motor current Im_a changes to $t_2$, the zero point crosspoint of the first current command value Iref_a' changes to $t_3$, and the phase of the motor current Im_a leads by $(t_3-t_2)$.

To compensate for a phase error caused by characteristic fluctuation of the current control system accompanying temperature fluctuation, a phase error between the first current command value Iref_a' and the motor current Im_a is detected. For example, as shown in FIG. 5, the phase error time between the zero point crosspoints $t_0$ and $t_1$ is measured where $t_0$ is the zero point crosspoint of the first current command value Iref_a' and $t_1$ is the zero point crosspoint of the motor current Im_a, and the phase error is obtained. From the phase error time between the zero point crosspoints to and $t_1$, an advance angle error gain is obtained by using the following expression 7.

[Expression 7]

$$K_{a(i)} = \frac{K_{a(i-1)} * n^* + n^* * \sigma t}{n^*} = K_{a(i-1)} + \sigma t$$

Wherein Ka is advance angle error gain, $Ka_{(i-1)}$ is preceding advance angle error gain, $n^*$ is motor rotation speed when the first current command value Iref_a' crosses the zero point, and $\sigma t$ is phase error time between the zero point crosspoint to of the first current command value Iref_a' and the zero point crosspoint $t_1$ of the motor current Im_a.

The phase error is found using the following expression 8 based on the advance angle error gain Ka found according to Expression 7 mentioned above.

[Expression 8]

$$\sigma\theta = K_a * n$$

Wherein $\sigma\theta$ is an error compensation value in making advance angle compensation for the phase error between the first current command value Iref_a' and the motor current Im_a, caused by characteristic fluctuation and Ka is advance angle error gain. That is, if a phase error is caused to occur by an external factor, the phase error time $\sigma t$ between the zero point crosspoints is detected, the advance angle error gain Ka is obtained based on Expression 7 mentioned above, and the error compensation value $\sigma\theta$ is obtained based on Expression 8 mentioned above. Advance angle compensation is made for the electrical angle $\theta$ of the current command value Iref_abc according to the error compensation value $\sigma\theta$ to obtain a second current command value Iref_a", and the phase error of the motor current Im_a is compensated for according to the second current command value Iref_abc".

Thus, the error compensation value $\sigma\theta$ and the compensation angle $\theta$a from the advance angle map are added to find an advance angle compensation value, advance angle compensation is made for the electrical angle $\theta$ of the current command value Iref_abc, and the phase lag and the phase error are compensated for.

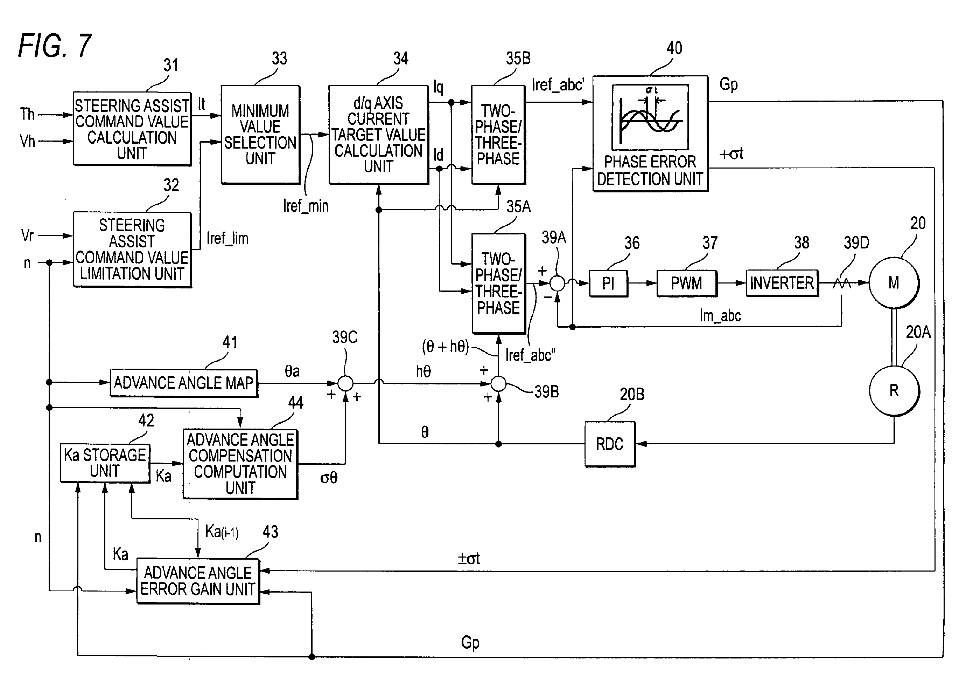

FIG. 7 shows a configuration example of the invention based on the principle described above. The basic configuration in FIG. 7 corresponds to that in FIG. 1. Members identical with those previously described with reference to FIG. 1 are denoted by the same reference numerals in FIG. 7 and will not be discussed again.

d-q axis current command values Id and Iq computed by a d/q axis current target value calculation unit 34 are input to a two-phase/three-phase conversion unit 35A and a two-phase/three-phase conversion unit 35B, and second current command value Iref_abc" computed by the two-phase/three-phase conversion unit 35A is input to a subtraction 39A.

On the other hand, first current command value Iref_abc' computed by the two-phase/three-phase conversion unit 35B is input to phase error detection unit 40. Motor current Im_abc detected by a motor current detection unit 39D is input to the subtraction 39A and is also input to the phase error detection unit 40.

The phase error detection unit 40 to which the first current command value Iref_abc' and the motor current Im-abc are input makes a comparison between the first current command value Iref_abc' and the motor current Im_abc and detects the phase error time σt between the zero point crosspoints.

Further, the phase error detection unit 40 makes a comparison between the detected phase error time σt and a predetermined value. If the phase error time σt is larger than the predetermined value, to update information of the phase error time σt and the advance angle error gain Ka, the phase error detection unit 40 outputs an advance angle error gain update pulse Gp to advance angle error gain unit 43 and Ka storage unit 42 and also outputs the detected phase error time at to the advance angle error gain unit 43. The Ka storage unit 42 to which the advance angle error gain update pulse Gp is input rewrites the stored advance angle error gain $Ka_{(i)}$ to preceding advance angle error gain $Ka_{(i-1)}$.

On the other hand, the advance angle error gain unit 43 to which the advance angle error gain update pulse Gp is input reads the preceding advance angle error gain Ka(i-1) stored in the Ka storage unit 42 and calculates an advance angle error gain Ka according to Expression 7 mentioned above based on the input phase error time σt and motor rotation speed n. The advance angle error gain Ka calculated by the advance angle error gain unit 43 is input to the Ka storage unit 42 and is stored as the advance angle error gain $Ka_{(i)}$. Advance angle compensation computation unit 44 reads the advance angle error gain Ka from the Ka storage unit 42 and performs multiplication processing based on the detected motor rotation speed n and Expression 8 mentioned above to calculate an error compensation value σθ. The error compensation value σθ calculated by the advance angle compensation computation unit 44 is input to an addition unit 39C.

An advance angle map 41 maps the relationship between the motor rotation speed n and phase lag based on FIG. 3 (or Expression 6 mentioned above) and outputs the compensation angle θa to the addition unit 39C based on the detected motor rotation speed n. The compensation angle θa and error compensation value σθ input to the addition unit 39C are added and the addition result, advance angle compensation angle hθ, is input to an addition unit 39B. The addition unit 39B adds the input advance angle compensation angle hθ and the electrical angle θ of a motor 20 detected by an RDC circuit 20B and outputs electrical angle (θ+hθ) for which advance angle compensation has been made to the two-phase/three-phase conversion unit 35A. The two-phase/three-phase conversion unit 35A calculates the second current command value Iref_abc" resulting from making advance angle compensation for the phase lag and phase error and outputs the computation result, the second current command value Iref_abc", to the subtraction 39A.

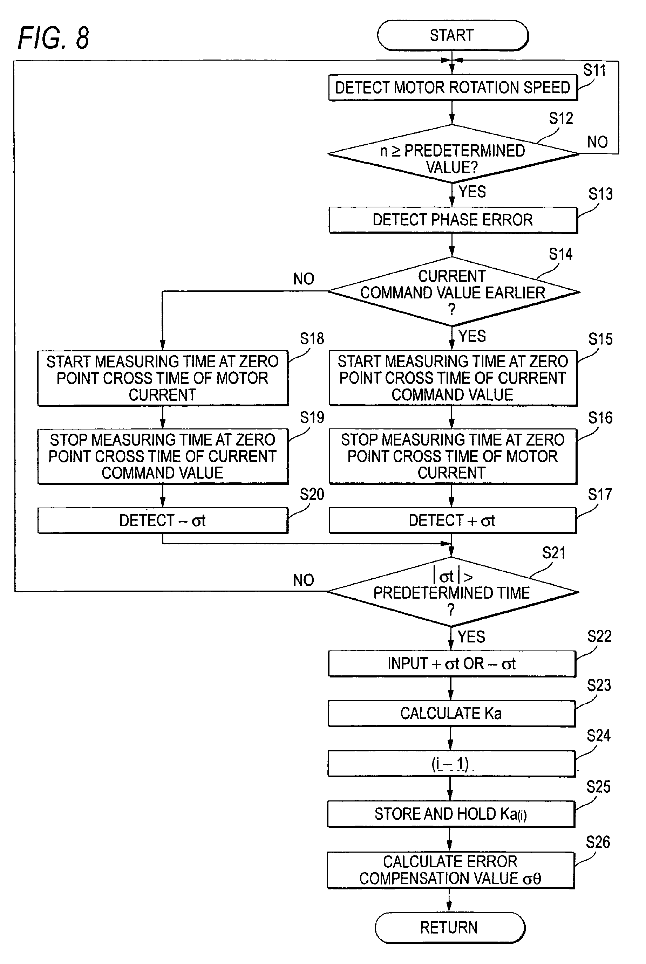

An operation example in the described configuration will be discussed with reference to a flowchart of FIG. 8.

The advance angle map 41 adapted to compensate for the phase lag of the motor current Im_abc according to the phase lag relationship between the motor rotation speed n and the motor current Im_abc outputs the compensation angle θa to the addition unit 39C in response to the detected motor rotation speed n.

First, motor rotation speed n is detected and is input (step S11).

The advance angle error gain unit 43 makes a comparison between the input motor rotation speed n and a predetermined value. If the input motor rotation speed n is smaller than the predetermined value, the process returns to S11 (step S12) . If the input motor rotation speed n is equal to or larger than the predetermined value, the phase error detection unit 40 detects a phase error between the first current command value Iref_abc' and the motor current Im_abc by detecting an arbitrary phase of the motor 20 (step S13) . For example, by detecting the first current command value Iref_a' and the motor current Im_a, the phase error time σt between the zero point crosspoints is detected based on the current waveforms of the detected first current command value Iref_a' and the detected motor current Im_ a.

To detect a phase error by measuring the zero point cross time, the phase error detection unit 40 determines which of the first current command value Iref_a' and the motor current Im_a crosses the zero point earlier (step S14).

If the first current command value Iref_a' crosses the zero point earlier, measuring of the phase error time σt is started at the time to at which the first current command value Iref_a' crosses the zero point as shown in FIG. 5 (step S15), and the measuring is terminated at the time $t_1$ at which the motor current Im_a crosses the zero point (step S16).

A sign of "plus" is added to the measured phase error time σt as phase error time +σt (step S17).

In step S14, it is adaptable to detect the phase error time σt by detecting a difference $(t_1 - t_0)$.

On the other hand, in the step S14, if it is determined that the motor current Im_a crosses the zero point earlier, measuring of the phase error time σt is started at the time $t_2$ at which the motor current Im_a crosses the zero point as shown in FIG. 6 (step S18) and the measuring is terminated at the time $t_3$ at which the first current command value Iref_ a' crosses the zero point (step S19). It is adaptable to detect the phase error time σt by detecting a difference $(t_3 - t_2)$. A sign of "minus" is added to the measured phase error time σt as phase error time -σt (step S20).

When the phase error time +σt or -σt is detected as described above, the phase error detection unit 40 compares the detected phase error time |σt| with a predetermined time. If the phase error time |σt| is equal to or less than the predetermined time, the process returns to 511. If the phase error time |σt| is larger than the predetermined time, to compensate for the phase error, the phase error detection unit 40 outputs the advance angle error gain update pulse Gp to the advance angle error gain unit 43 and the Ka storage unit 42 and also outputs the detected phase error time +σt or -σt to the advance angle error gain unit 43 (step S22).

When the advance angle error gain update pulse Gp is input, the advance angle error gain unit 43 reads the preceding advance angle error gain $Ka_{(i-1)}$ from the Ka storage unit 42 and calculates the advance angle error gain Ka according to Expression 7 mentioned above based on the input phase error time +σt or -σt (step S23).

When the advance angle error gain update pulse Gp is input, the Ka storage unit 42 changes the phase error gain $Ka_{(i)}$ stored at the preceding time to the preceding phase error gain $Ka_{(i-1)}$ and then store and hold the value (step S24).

The advance angle error gain Ka calculated by the advance angle error gain unit 43 is input to the Ka storage unit 42 and is stored in the Ka storage unit 42 as the advance angle error gain $Ka_{(i)}$ (step S25).

The advance angle compensation computation unit 44 reads the advance angle error gain Ka (advance angle error gain $Ka_{(i)}$) from the Ka storage unit 42 and performs multiplication processing according to Expression 8 mentioned above based on the input motor rotation speed n to calculate an error compensation value σθ (step S26).

The error compensation value σθ calculated by the advance angle compensation computation unit 44 is input to the addition unit 39C, which then adds the error compensation value to the compensation angle θa from the advance angle map 41 to obtain the advance angle compensation angle hθ to compensate for the phase lag and the phase error, and outputs the advance angle compensation angle hθ to the addition unit 39B.

The addition unit 39B adds the advance angle compensation angle hθ and the electrical angle θ of the motor 20 and outputs the addition result of the electrical angle (θ+hθ) for which advance angle compensation has been made to the two-phase/three-phase conversion unit 35A. The two-phase/three-phase conversion unit 35A generates the second current command value Iref_abc" which is performed advance angle compensation.

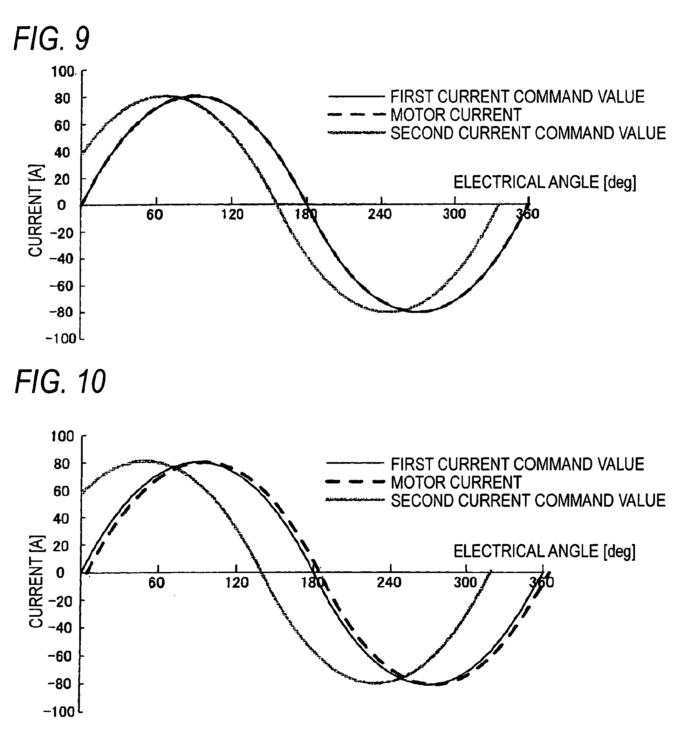

FIG. 9 shows a state where the phase lag of the motor current occurring in FIG. 4 is compensated for according to the second current command value Iref_a". That is, it shows a state where the phase lag between the motor current Im a and the first current command value Iref_a' is compensated for according to the second current command value Iref_a".

FIG. 10 shows an example in which the phase lag occurring in FIG. 4 and the phase error occurring in FIG. 5 are compensated for. That is, it shows a state where the phase lag and the phase error occurring in the motor current Im_a and the first current command value Iref_a' are compensated for according to the second current command value Iref_a".

In a state where the phase error is compensated for according to the error compensation value σθ, if further temperature fluctuation, etc., occurs and phase error time σt' occurs, the advance angle error gain unit 43 calculates a new advance angle error gain Ka based on the phase error time σt' detected by the phase error detection unit 40 and outputs the advance angle error gain $Ka_{(i)}$ to the Ka storage unit 42, which then calculates a new error compensation value σθ based on the preceding advance angle error gain $Ka_{(i-1)}$ and the new input advance angle error gain $Ka_{(i)}$.

The advance angle error gain Ka is updated with about 180 degrees as a guideline because the characteristic depending on temperature fluctuation has large inertia depending on the time and change in the characteristic is slow.

The preceding advance angle error gain stored in the Ka storage unit 42 may be erased.

As the detection method example of the phase error time by the phase error detection unit 40, the detection method of the phase error time based on zero point cross for detecting the time of current value "0A" has been describe. However, the phase error time σt between the first current command value Iref_a' and the motor current Im_a may be detected according to a predetermined current value.

The three-phase motor has been described, but the number of phases is arbitrary.

In the initial state (at the power on time, etc.,), the advance angle error gain unit 43 may set the advance angle error gain to 0.

While the invention has been described in connection with the exemplary embodiments, it will be obvious to those skilled in the art that various changes and modification may be made therein without departing from the present invention, and it is aimed, therefore, to cover in the appended claim all such changes and modifications as fall within the true spirit and scope of the present invention.

**Claims**

1.   . A control device for an electric power steering apparatus comprising:

a control unit which controls a motor giving steering assist force to a steering system according to a current command value computed based on steering toque and vehicle speed in a vector control manner; and
an advance angle map for compensating for a phase lag occurring in a motor current relative to the current command value,
wherein advance angle compensation is made for the current command value based on the advance angle map.

**2.** . The control device for the electric power steering apparatus according to claim 1, wherein in the advance angle map, a compensation angle for compensating for the phase lag in response to motor rotation speed is added to the electrical angle of the motor.

**3.** . The control device for the electric power steering apparatus according to claim 2, wherein the compensation angle is a non-linear characteristic in response to the motor rotation speed.

**4.** . A control device for an electric power steering apparatus comprising:

a control unit which controls a motor giving steering assist force to a steering system according to a current command value computed based on steering toque and vehicle speed in a vector control manner; and
a phase error detection unit which detects a phase error time of a motor current relative to the current command value caused by an external factor,
wherein advance angle compensation is made for the current command value based on the phase error time.

**5.** . The control device for the electric power steering apparatus according to claim 4, wherein the phase error detection unit makes a comparison between current waveforms of the current command value and the motor current and detects the phase error time.

**6.** . The control device for the electric power steering apparatus according to claim 4, further comprising:

an advance angle error gain unit which calculates an advance angle error gain based on the rotation speed of the motor and a preceding advance angle error gain; and
a storage unit which stores the advance angle error gain calculated by the advance angle error gain unit.

**7.** . The control device for the electric power steering apparatus according to claim 6, wherein upon detection of an advance angle error gain update pulse output from the phase error detection unit, the storage unit stores the advance angle error gain and the advance angle error gain unit computes the advance angle error gain.

**8.** . The control device for the electric power steering apparatus according to claim 7, wherein the phase error detection unit makes a comparison between the detected phase error time and a predetermined time and if the phase error time is larger than the predetermined time and the motor rotation speed is larger than predetermined rotation speed, the phase error detection unit outputs the phase error gain update pulse.

**9.** . The control device for the electric power steering apparatus according to claim 6, wherein upon detection of the phase error gain update pulse, the storage unit converts the stored advance angle error gain into preceding advance angle error gain and stores the preceding advance angle error gain.

**10.** . The control device for the electric power steering apparatus according to claim 9, further comprising:

advance angle compensation computation unit which calculates an error compensation value based on the advance angle error gain and the motor rotation speed,
wherein advance angle compensation is made for the current command value according to the error compensation value.

**11.** . The control device for the electric power steering apparatus according to claim 10, wherein, the advance angle compensation computation unit adds the error compensation value to the electrical angle of the motor, thereby making advance angle compensation.

## FIG. 1

Th, Vh → **STEERING ASSIST COMMAND VALUE CALCULATION UNIT** (31) → It

Vr, n → **STEERING ASSIST COMMAND VALUE LIMITATION UNIT** (32) → Iref_lim

→ **MINIMUM VALUE SELECTION UNIT** (33) → Iref_min → **d/q AXIS CURRENT TARGET VALUE CALCULATION UNIT** (34) → Iq, Id → **TWO-PHASE/THREE-PHASE** (35) → Iref_abc → ΔIref_abc (39A) → + / − → **PI** (36) → **PWM** (37) → **INVERTER** (38) → (39D) → **M** (20)

Im_abc

**R** (20A)

**RDC** (20B)

θ

EP 1 955 926 A2

*FIG. 2*

## FIG. 3

## FIG. 4

## FIG. 5

----------- FIRST CURRENT COMMAND VALUE
– – – MOTOR CURRENT

## FIG. 6

----------- FIRST CURRENT COMMAND VALUE
– – – MOTOR CURRENT

FIG. 7

EP 1 955 926 A2

**FIG. 8**

```
                              ┌─────────────┐
                              │    START    │
                              └──────┬──────┘
                                     │
                    ┌────────────────────────────────┐  S11
                    │   DETECT MOTOR ROTATION SPEED   │
                    └────────────────┬───────────────┘
                                     │              S12
                              ◇─────────────────◇        NO
                              │ n ≥ PREDETERMINED │──────────┐
                              │      VALUE?       │          │
                              ◇─────────┬─────────◇          │
                                     │ YES                   │
                    ┌────────────────────────────────┐  S13  │
                    │       DETECT PHASE ERROR        │       │
                    └────────────────┬───────────────┘       │
                                     │              S14       │
                 NO           ◇─────────────────◇            │
          ┌──────────────────│     CURRENT       │           │
          │                  │ COMMAND VALUE      │           │
          │                  │   EARLIER ?        │           │
          │                  ◇─────────┬─────────◇           │
          │                         │ YES                    │
   ┌──────────────┐  S18    ┌────────────────────┐  S15      │
   │ START         │        │ START MEASURING     │          │
   │ MEASURING TIME│        │ TIME AT ZERO        │          │
   │ AT ZERO POINT │        │ POINT CROSS TIME OF │          │
   │ CROSS TIME OF │        │ CURRENT COMMAND     │          │
   │ MOTOR CURRENT │        │ VALUE               │          │
   └───────┬───────┘        └─────────┬──────────┘          │
           │          S19             │            S16       │
   ┌──────────────┐        ┌────────────────────┐           │
   │ STOP          │        │ STOP MEASURING      │          │
   │ MEASURING TIME│        │ TIME AT ZERO        │          │
   │ AT ZERO POINT │        │ POINT CROSS TIME OF │          │
   │ CROSS TIME OF │        │ MOTOR CURRENT       │          │
   │ CURRENT       │        └─────────┬──────────┘          │
   │ COMMAND VALUE │                  │                      │
   └───────┬───────┘  S20             │            S17       │
   ┌──────────────┐        ┌────────────────────┐           │
   │  DETECT – σt  │        │    DETECT + σt      │          │
   └───────┬───────┘        └─────────┬──────────┘          │
           └──────────────────────────┤                      │
                         NO            │            S21       │
                              ◇─────────────────◇            │
                    ┌────────────│    |σt| >         │        │
                    │            │ PREDETERMINED TIME │       │
                    │            │        ?          │        │
                    │            ◇─────────┬─────────◇        │
                    │                   │ YES                 │
                    │         ┌────────────────────┐  S22     │
                    │         │  INPUT + σt OR – σt  │         │
                    │         └─────────┬──────────┘          │
                    │                   │            S23       │
                    │         ┌────────────────────┐          │
                    │         │    CALCULATE Ka     │          │
                    │         └─────────┬──────────┘          │
                    │                   │            S24       │
                    │         ┌────────────────────┐          │
                    │         │      (i – 1)        │          │
                    │         └─────────┬──────────┘          │
                    │                   │            S25       │
                    │         ┌────────────────────┐          │
                    │         │  STORE AND HOLD Ka(i)│         │
                    │         └─────────┬──────────┘          │
                    │                   │            S26       │
                    │         ┌────────────────────┐          │
                    │         │ CALCULATE ERROR     │          │
                    │         │ COMPENSATION VALUE σθ│         │
                    │         └─────────┬──────────┘          │
                    │                   │                      │
                    │            ┌─────────────┐               │
                    │            │   RETURN    │               │
                    │            └─────────────┘               │
                    └──────────────────────────────────────────┘
```

17

## FIG. 9

FIRST CURRENT COMMAND VALUE
MOTOR CURRENT
SECOND CURRENT COMMAND VALUE

## FIG. 10

FIRST CURRENT COMMAND VALUE
MOTOR CURRENT
SECOND CURRENT COMMAND VALUE

## FIG. 11

EP 1 955 926 A2

## FIG. 12

EP 1 955 926 A2

**EP 1 955 926 A2**

## REFERENCES CITED IN THE DESCRIPTION

**Patent documents cited in the description**

- JP 3501370 B
- JP 2005199735 A